# EUROPEAN PATENT SPECIFICATION

(11) **EP 0 907 492 B1**
(45) Date of publication and mention of the grant of the patent: **11.10.2000**
(21) Application number: 97921848.4
(22) Date of filing: 02.05.1997
(51) Int. Cl.: B29C 47/50, B29C 47/74, B29C 47/76, B29C 47/38

(54) **PORT DEVICE FOR EXTRUDER**
NEBENVORRICHTUNG FÜR EXTRUDER
DISPOSITIF D'ACCES A UNE EXTRUDEUSE

(30) Priority: 03.05.1996 IT MI960864
(43) Date of publication of application: 14.04.1999
(73) Proprietor: Ponzielli, Giuseppe, 21034 Cocquio Trevisago (IT)
(72) Inventor: Ponzielli, Giuseppe, 21034 Cocquio Trevisago (IT)
(74) Representative: Ritscher, Thomas, Dr.Rer.Nat.Dipl.-Chem.
(86) International application number: EP9702248
(87) International publication number: WO9742019

(56) References cited:
- DE-C- 3 615 586
- FR-A- 1 048 701
- GB-A- 190 012 574
- US-A- 2 607 077
- US-A- 3 797 550
- US-A- 4 310 251
- PATENT ABSTRACTS OF JAPAN vol. 005, no. 043 (M-060), 23 March 1981 & JP 56 000139 A (KOBE STEEL LTD), 6 January 1981,
- PATENT ABSTRACTS OF JAPAN vol. 009, no. 011 (M-351), 18 January 1985 & JP 59 159328 A (KOBE SEIKOSHO KK), 8 September 1984,

## Description

This invention generally relates to the art of processing compositions which, upon the application of process temperatures, are capable of forming a viscous mass. More specifically, the invention relates to a port device suitable for processing control of a processor, such as an extruder or similar processor capable of producing an essentially continuous stream of a viscous mass, such as, typically, a molten polymer composition.

Numerous apparatus means are known for continuous processing of polymer compositions. Probably the most widely used type of processor, also termed "extruder" (even if not used for actual extrusion but for conveying purposes) or "barrel processor" essentially consists of an elongated cylinder or barrel, and at least one elongated rotor also termed "screw", typically in the form of an elongated cylinder with a helical channel wrapped around it and the art is replete with processors of the type including helical rotors. By way of examples, US-A-3 154 808 and US-A-5 356 208 and the references cited therein illustrate various types of prior art processors based upon a helical rotor or screw arranged in a horizontal position. Two parallel screws may be arranged in a common housing for operation in a co-rotating or counter-rotating manner.

For the purposes of the present invention, all such devices are intended to be encompassed by the term "processor" if they are capable of producing and/or conveying an essentially continuous stream of a viscous material, such as a molten polymer composition.

A problem connected with such processors is that access to the interior of the processor may be required for various types of processing control, such as feeding or co-feeding particulate solids, liquids or gaseous constituents into the processed composition, or for venting (removal of gaseous components or vapours resulting from processing), or for additional or supplemental mixing of the processed composition, and the like, while safely preventing undesired outflow of processed materials from the processor.

For example, conventional devices for venting a polymer processor include a reduced-pressure zone within the processor and conduit means connected therewith, frequently involving external suction for improving the de-gassing efficiency of the venting device. The terms "gas" and "gaseous" as used herein in the context of venting includes gases, such as resulting from thermal decomposition, as well as vapours, such as resulting from humidity of in-fed components upon exposure to temperatures above the boiling point of water.

The concept of "feeding" as used herein includes "co-feeding", i.e. the input of one or more additional constituents into the processor, but includes "normal" feeding as well, i.e. the introduction of one or more main constituents, such as a polymer stock or compound, and/or introducing additives in any desired form including particulate solids, liquids and gases.

Typical prior art ports for feeding, or co-feeding purposes include hoppers, screw feeders, and pumps. For the purpose of the present invention, a "port device" generally is an apparatus, or apparatus portion, that provides access to the stream of viscous material within a processor.

US-A-3 797 550 discloses a wiped film devolatilizer for processing relatively viscous melts; this device comprises a rotor arranged within an elongated enclosure and having several flight portions of varying diameters and differing functions. The distance between the outermost surface of the flights and the enclosure is shown to be equal in all portions and must be small in view of the required functions. Accordingly, that reference does not disclose a combination of shearing and scraping flights such as shown in US-A-5 356 208 mentioned above, where shearing and scraping flights actions are combined because of the shape of the rotor; that device is an extruder-type processor in its own right and not a port device for an extruder-type processor, permitting various port functions including feeding, supplemental mixing and de-gassing.

### Objects and Summary of the Invention

Now, it would be desirable if the port device would make it possible to branch off a portion, at least, or all of the viscous material stream, and to treat the branched-off material in any desired manner, such as by addition of any desired constituents, removal of undesired constituents, such as gasses or vapours, additional mixing, pressurising, metering and the like. The branched-off stream could either be returned to the processor from which it is derived, or be passed into a different device, such as a moulding apparatus. To the best of applicants knowledge, no port device capable of such general usage is known in the art of processing streams of viscous material, such as, typically, polymer compositions.

Specifically, it is a main object of the invention to provide for a novel type of port device that could not only be used for processing control purposes of the conventional type, i.e. in-feeding into as well as out-feeding from a polymer processor, such as an extruder, while also providing for other types of processing control, notably additional mixing of the processed material, pressurising, and other operations, such as metering.

It is a further object of the invention to provide for a novel port device that can be used for processing control of the types mentioned above while having a relatively uncomplicated structure and being capable of simple operation and maintenance without creating additional problems, such as an uncontrolled outflow of material from the processor. Further objects will become apparent as the specification proceeds.

Briefly and according to a main general aspect, the present invention provides for a port device which is capable of meeting the above objects and incorporates the features defined in claim 1. Preferred embodiments of the port according to the invention are as defined in claims 2 to 8.

According to a second general embodiment, the invention provides for an apparatus comprising at least one port device in operative connection with at least one extruder as defined in claims 9 and 10.

According to a third general embodiment, the invention provides for a method of processing a viscous polymer composition by means of at least one port device according to the invention as specified in claims 10 and 11.

### Terminology and brief discussion of preferred embodiments

A suitable enclosure means (i) of a port as specified in claim 1 is a housing, cylinder, or barrel generally made of a structural material, such as steel, and encompassing an elongated and preferably essentially cylindrical cavity which extends along a longitudinal and essentially vertical axis; the cavity has an axially open first end, a second end opposite the first end, an outlet near the second end and, in general, a radially arranged inlet for passing the viscous mass from the processor into the port. Accordingly, the term "enclosure means" as used herein is intended to refer to an enclosure capable of receiving and holding at least one elongated rotor, and includes typical enclosure means, such as barrels, cylinders, blocks and other configurations. For many purposes of the invention, the port device according to the invention comprises only one rotor, in which case the cavity preferably is essentially cylindrical, but the use of two rotors, operated co-rotationally or counter-rotationally, is not excluded.

The term "elongated" as used herein is intended to indicate that the length dimension is at least equal to, or exceeds, the width dimension of whatever is said to be "elongated". Typically, the length dimension of an "elongated" component of a port according to the invention is at least twice the width dimension, it being understood that the width dimension need not be uniform along the length dimension.

The general interior shape of the elongated cavity will essentially be defined by the shape of the rotor, or rotors, and is generally cylindrical if only one rotor is present but need not have a uniform width throughout.

The cavity has an axially open first end and a second end opposite the first end. "Axially open" refers to an opening in axial direction which preferably extends substantially over the entire cross-sectional plane of the cavity.

The elongated rotor (ii) is arranged within the cavity for rotation in an essentially coaxial alignment with the longitudinal axis of the cavity and is connected with a drive means (iii), such as a motor and gear by means of a drive shaft, preferably at the downstream end of the rotor, i.e. the end near the outlet.

In such a generally preferred embodiment, the stream of viscous material first contacts the rotor near its free and unsupported end and exits from the port device near the driven, and hence shaft-supported, end of the rotor. Since this is the opposite of typical prior art screw-type processors (where the inlet is near the driven end while the outlet is near the unsupported free end of the rotor), such preferred embodiment of a port device according to the invention is termed an "inverted flow" machine.

In a generally preferred embodiment, the port device according to the invention has - in addition to the open end where additional constituents, such as fillers, may be added - an inlet for the viscous material from the processor. Generally, such inlet is arranged in a radial, or essentially horizontal manner. In a similar manner, the outlet will also be arranged in a radial, or essentially horizontal manner if the port device is structured for inverted flow.

Conveying means (iv) or "flights" are provided for causing a stream of the viscous material to flow in a general downward direction from the radial inlet toward the closed second end and through the outlet when the rotor is actuated. Accordingly, the term "conveying means" generally relates to any structural interaction between the rotor and the enclosure such that a normally solid or viscous fluid within the cavity will tend to flow from the first end of the cavity to it's second end when the rotor is actuated by the drive. Such conveying means include at least one portion of the rotor surface being provided with "flights" or "threads" extending along the rotor in a helical manner and at an angle relative to a cross-sectional plane so as to control passage of the processed material by the rotor's movement. As is known in the extruder art, such flights or threads have a conveying effect depending upon the flight angle, the shape of the rotor and its distance ("gap") from the inner barrel surface.

According to the invention, the flights provided on the rotor of the port device include at least one "scraping" flight portion and at least one "shearing" flight portion. In a preferred embodiment, the rotor further includes a "sealing" flight portion to prevent passage of polymer to the rotor's drive. Further, a portion of the flights may be stationary, i.e. formed by a wall portion of the enclosure as will be explained in more detail below. Generally, a "flight" is a portion of the rotor, or of its adjacent stationary wall, forming a "helical" channel in the sense that the length extension of the flight is both circumferential and (except for stopping flights with zero flight angle) longitudinal.

The terms "shearing flights" and a "scraping flights" are not always used consistently in the art; while it is easy to distinguish between their respective functions, this is not so with regard to structure. Generally, the shearing function depends upon the capability of the flights to exert a shearing force upon the processed material, and the shear rate in a screw-type flow is related to the ratio (dV/dh) of the speed of rotation to the distance between rotor and adjacent enclosure wall. This ratio is commonly termed "velocity gradient" and the purpose of a shearing activity of a flight is to impart a high velocity gradient to the processed material and, consequently, to cause a shear stress therein which may be required to enhance the dispersive capacity of the flight.

Generally, a shearing flight, according to the invention, may have the capacity to produce a flow both in circumferential as well as in axial directions. In the circumferential direction, the viscous liquid material is dragged along a 360° path since in such direction there are no restrictions preventing the flow as typically is the case with a scraping flight. Accordingly, the shearing action takes place in such area, and is enhanced by the fact that the circumferential gap is not constant but varies between a minimum gap width and a maximum gap width. This is explained as follows: in a top view from above, the cross-sectional view of a shearing flight within a cylindrical cavity would appear as a noncircular shape, e.g. an oval, ovoid or other regular or irregular shape arranged within a circle. Then, there will be a smallest distance as well as a largest distance (and any number of intermediate distances) between the circle and the inscribed shape; the smallest distance constitutes the "minimum gap" while the largest distance constitutes the maximum gap.

In a preferred embodiment, a shearing flight according to the invention extends at a spaced distance from the inner surface of the enclosure while gradually decreasing from a maximum in the direction opposite to the direction of rotation until it reaches a minimum spaced distance. Generally, the shearing action of a shearing flight along the circumference of the rotor is the basic action required to produce a distributive as well as dispersive mixing effect within the cavity. This, however, is not the only function because, in general, it also tends to produce some axial flow which contributes to make the viscous material proceed in a downward direction.

A definition of "shearing flights" suitable for the present invention is given in the above-mentioned US-A-5 356 208 and hence does not need a more detailed discussion.

The function of scraping flights, on the other hand, is to guide the processed material along the helical channel while avoiding or minimising a backward "escape" of the material through the flight while conveying. This latter function becomes particularly significant when a pressure gradient acts upon the processed material, and the rate of the escape primarily is a function of the pressure gradient and the flight clearance (gap), if other contributive factors, such as viscosity, helix angle, etc. are maintained essentially constant. In sum, the essential function of scraping flights is to optimise flux of the processed material in the desired direction.

Theoretically, a screw flight can cause both a scraping and a shearing function (cf. the horizontally arranged mixing devices disclosed in the above-mentioned US-A-3 154 808 and US-A-5 356 208, both of which are incorporated by way of reference for terminological reasons). According to the invention, however, the conveying means include at least one flight portion which is essentially scraping and is provided near the outlet, and at least one flight section which is essentially shearing and is arranged upstream (i.e. nearer the axially open end) of the scraping flight section. Structural definitions for use in context with the present invention will be given in more detail below.

As mentioned briefly above, the longitudinal axis of the cavity of the port device extends in an essentially vertical direction, i.e. at about 90° (± 30°) relative to the horizontal direction. In other words, the rotor of a port according to the invention is arranged essentially in a "standing" position and the flow of material will be from top to bottom and con-gravitational, i.e. enhanced by gravity rather than obstructed.

The term "upstream" is intended herein to indicate a relative position that is nearer the input end than a "downstream" position which is nearer the output end of a port device according to the invention, or a co-ordinated processor.

Main benefits of the invention will be achieved when the port device provided with an inlet for connection with the associated processor, e.g. extruder, so as to permit passing a portion, at least, of the stream of viscous material from the associated processor into the port device, e.g. for co-feeding and/or venting and/or other processing control operations.

According to a preferred general embodiment, the invention provides for an apparatus (including plants, systems or installations) in which a stream of a viscous composition, such as a polymer composition fillers and additives is processed, e.g. for feeding a moulding installation, e.g. an injection moulding device. In such an apparatus, at least one port device according to the invention is in operative connection with at least one extruder. "Operative connection" means that at least one conduit is provided between the extruder and the port so as to pass at least a portion of the processed material from the extruder to the port and/or vice versa.

While the port device can be used advantageously in any continuous method of processing a stream of a viscous (e.g. having a typical viscosity of at least 10 Pa.s at the processing temperature) material in various technologies, it is of primary importance in the technology of preparing and processing polymer compositions, notably when such process control includes such techniques as venting, feeding, co-feeding and additional mixing, either singly or in combination.

### Brief Explanation of the Drawings

The invention will now be explained in more detail with reference to the enclosed drawings which illustrate preferred but non-limiting embodiments of the invention. The first digit of each reference number is indicative of the number of the corresponding figure while same or analogous parts are indicated by the same digits after the first figure-indicating digit. In the drawings:
Figure 1 is a diagrammatic and partly sectional view of a port device according to the invention;
Figure 2 is a diagrammatic and partly sectional view of a modified port device according to the invention;
Figure 3 is a diagrammatic sectional view of yet another embodiment of a port device according to the invention.
Figure 3A is a cross-sectional view along A-A of Figure 3;
Figure 4 is a diagrammatic and partially sectioned view of an in-line combination of two port devices according to the invention;
Figure 5 is a diagrammatic and partially sectioned view of the combination of an extruder and two port devices according to the invention;
Figure 6 is a diagrammatic view of a combination of the arrangement shown in Fig. 5 with a moulding device via a two-way channel;
Figure 7 is a diagrammatic sectional view of a port for processing control including additional mixing of a polymer composition; and
Figure 8 is a diagrammatic sectional view of a port that provides for controlled re-circulation within the port.

### Detailed Explanation of the Drawings

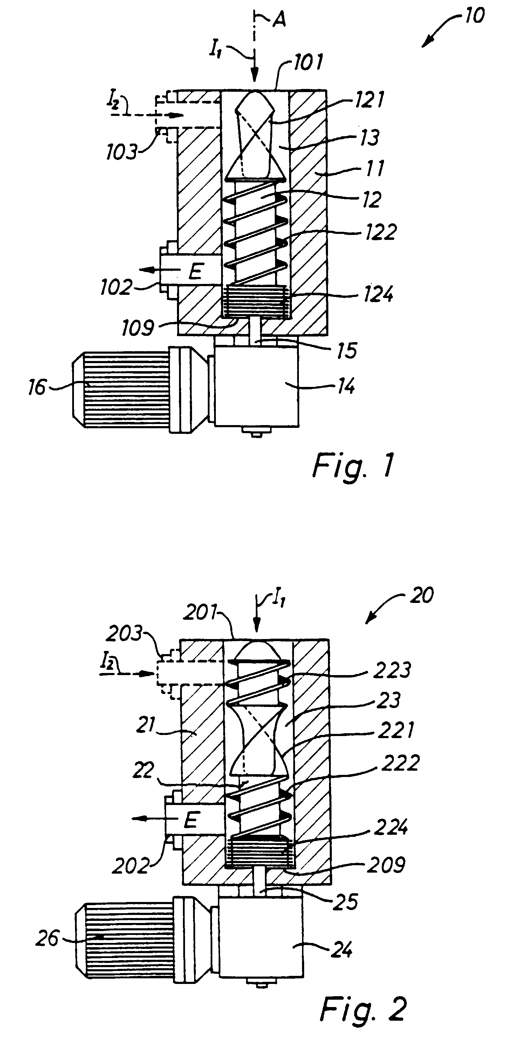

The port device 10, or simply "port" shown diagrammatically in Fig. 1 is presented in a cross-sectional view of the elongated enclosure or barrel 11 in a plane intersecting with the longitudinal axis A, which is common to the barrel 11, the elongated rotor 12 (shown in lateral top view) and the elongated cavity 13 of processor 10. Axis A extends in an essentially vertical direction.

The upper end 101 of port 10 may be completely open as shown in Fig. 1, or - if used for co-feeding and not for venting - be connected with the lower end portion of a conventional hopper, chute or the like (not shown). Component material, e.g. a particulate or fibrous additive or filler is introduced into cylindrical cavity 13 in an axial direction as indicated by I₁ and in the area of the free end of screw 12. At the same time, gaseous components can be fed out of cavity 13 in a direction opposite I₁.

Complementally, a radial input 103 is provided so that viscous process material from a co-ordinated extruder or other processor (not shown in Fig.1) can be introduced into cavity 13 in a radial direction indicated by arrow I₂, be it for venting and/or mixing of the process material, or for blending thereof with the constituent(s) introduced axially at upper end 101 of cavity 13.

Rotor 12 presented in Fig. 1 in lateral top view comprises a shearing flight portion 121 at the upper end of rotor 12 near the upper end 101 of cavity 13, a scraping flight portion 122, and a sealing flight portion 124 near the lower end 109 of cavity 13 where the shaft end of rotor 12 is connected with shaft 15 which, in turn, is connected with a gear (not illustrated) arranged within gear box 14 for connection with motor 16. A shearing flight portion 121 forms the upper free end of rotor 12.

It will be apparent that the flow of solid material will be in a generally "downward" direction from either or both inlet 101 and/or 103 towards outlet 102 and, hence, supported by gravity. Gaseous matter, on the other hand, will move "upwards" due to its differing density. Rotor 12 will be caused to turn in conveying direction which will be governed by the fact whether the flight of the screw will be "right-handed" or "left-handed". Since the scraping portion 122 and, preferably, the shearing flight shown in Fig. 1 are "right-handed", the direction of rotation of rotor 12 will be counter-clockwise when viewed from the top.

As regards the function of shearing flight portion 121 of rotor 12, this portion should exert a significant shear effect or shear action which, in turn, is related to the velocity gradient, i.e. ratio (dV/dh) of the screw speed to the distance between the screw flight surface and the enclosure mainly along the circumference of the rotor. A main purpose of shearing flight portion 121 is to enhance the dispersive capacity of port device 10. Generally, a port device of this is suitable both for venting as well as feeding or co-feeding of a co-ordinated processor, and both functions could by effected with one or with two or more port devices of this type.

The function of scraping flight section 122, on the other hand, aims primarily at guiding and conveying the processed material down the helical channel (i.e. the interspace between the flights and the enclosure) and, secondly, to avoid that the material escapes through the flights when being conveyed. This second function is substantially increased when a pressure P gradient dP/dz (z = distance along helical axis) is superimposed upon the processed material. As to details and optimisation of both the shearing function as well as the scraping function of the corresponding portions 121, 122 of rotor 12, reference is again made to U.S. patents 3 154 808 and 5 356 208. According to the invention, it is preferred for many purposes that the shearing flight section forms two downwardly extending cavity portions, typically forming a helix angle between 45° and 85°.

Typically, the flight angle of shearing flight portion 121 of rotor 12 will be in the range of from about 45 - 85° while the flight angle of the scraping flight portion 122 will be in the range of from about 10 - 30°. However, shearing flight portions having a helix angle of 0° are possible and may be preferred when an essentially pure pressure flow in the shearing zone is desired. In such a case, and upstream flight portion should be provided which either is a scraping flight or a shearing flight with a positive angle in the above range.

By the same token, sealing flight portion 124 will have a negative (reverse) angle typically in the range of from about 3 - 8° for back-feeding action. As will be apparent to those experienced in the art, the vertical distance between adjacent flights of a given flight section essentially is a function of the flight angle, aside from the longitudinal width of the flight surface that closest to the inner surface of the enclosure.

It is to be noted that enclosure 11 may, but need not be a barrel, i.e. have a generally tubular shape, and any shape of the enclosure is suitable if it provides for sufficient structural strength and satisfies functional requirements, such as connection with upstream and downstream apparatus.

Obviously, an additional parameter that influences operation of a port device according to the invention operating by inverted flow is the distance between the outermost surface of the flights and the inner surface of the cavity. In the shearing flight portion 121 this distance is substantially greater than in scraping flight section 122 by a factor of at least about 10, preferably at least 20, and more preferred at least 40. In scraping flight portion 122 and in sealing flight portion 124 the distance will be as small as possible, typically in the range of from about 0.05 to 0.1 mm. The axial length of shearing flight portion 121 can be selected in view of specific requirements; a typical length is in the range of from about 50 - 600 mm.

Typically, rotor 12 will be operated at a speed in the range of from about 0.2 m/sec - 3 m/sec (evaluated from the outermost surface of the rotor); in practice, this will correspond to about 5 - 1200 rpm when the inner diameter of cavity 13 is in the range of from about 50 to 500 mm and the length of cavity is at least about twice its diameter.

Port 20 shown in Fig. 2 is presented in a similar manner as in Fig. 1 and is constructed in a generally similar manner as processor 10 of Fig.1. The difference is that shearing flight portion 221 of processor 20 is arranged between an upper scraper flight portion 223 and the lower scraper flight portion 222, so that axial inlet 201 and/or radial inlet 203 opens into the cavity region which is dominated by upper scraping flight portion 223. In other words, it is not critical that a shearing flight portion is at the upper free end 101, 201 of cavity 13,23 and rotor 12, 22 if a scraping flight portion 122,222 is arranged downstream. Generally, the total axial length of flight portion(s) 122,222,223 is at least equal to the axial length of flight portion(s) 121,221 and may be up to 10 times longer.

While the overall axial length of a port device according to the invention is not critical and could be selected so as to include, say, two shearing flight portions and three scraping flight portions, it is believed to be an advantage of the inventive processor that a maximum of effectiveness can be combined in a device having relatively small longitudinal dimensions.

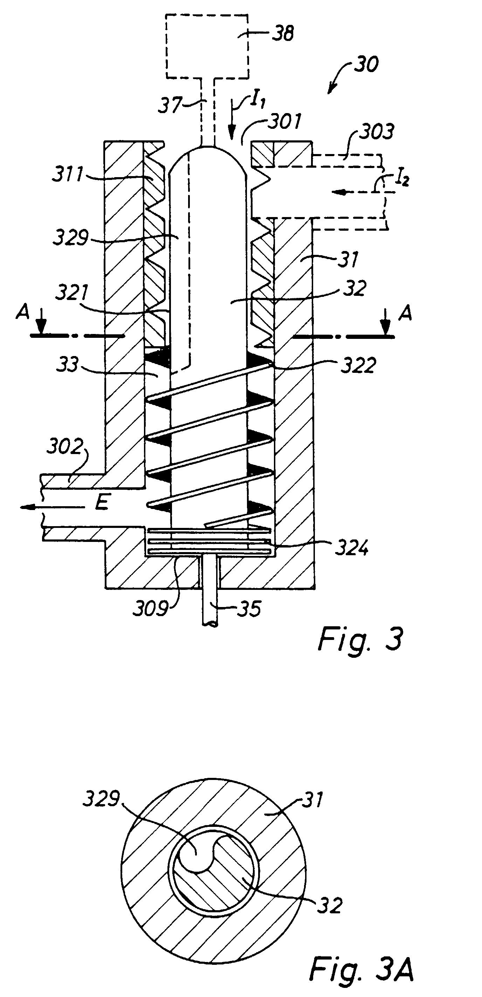

Port 30 schematically illustrated in Fig. 3, again, is presented with a sectional view of enclosure 31 and a lateral top view of rotor 32. In this embodiment, however, the upper portion of rotor 32 has an essentially smooth cylindrical surface 321 while a first flight portion is formed by rotor surface 321 in co-operation with stationary flights 321.

Further, as indicated in Fig. 3 in broken lines, the drive connection need not be positioned at the lower end 309 of cavity 33, i. not via shaft 35, but could as well be arranged at the upper end of rotor 32, i.e. near the upper end 301 of cavity 33 by means of shaft 37 and drive 38 (both shown in broken lines). Flights 324 can be formed as part of an insert 311 or be part of the inner wall of barrel 31.

A second and flight 322 is formed at the lower portion of rotor 32. When rotor 32 is driven from the upper end via shaft 37 and drive 38, a sealing flight 324 can be omitted since, in that case, lower end 309 of cavity 33 would not be penetrated by a drive shaft 35.

The port device shown in Fig. 3 is particularly suited for venting purposes. Viscous material form the cavity of a co-ordinated extruder (not shown) can be fed via radial inlet 303 situated downstream of axial opening 301 which serves mainly for feeding out gaseous matter, i.e. venting in the reverse direction of arrow I₁ and the stream of material (not shown in the figures) is fed out from port device 30 via outlet 302. Again, if rotor 32 is driven from its top via shaft 37 and drive 38, outlet 302 need not be radially oriented but could penetrate the wall of enclosure 31 at the lower end 309 of cavity 33.

To improve the venting effectiveness, the essentially cylindrical upper portion 321 of rotor 32 is provided with a longitudinal recess 329 having a cross-sectional shape as shown in Fig. 3A (taken along A-A of Fig. 3). While the rotor shown is provided with a single recess 329, it is well within the purview of this embodiment of the invention to provide two, three or more longitudinal recesses, and the cross-sectional shape of the recesses could be the same or different. Further, while a curved or essentially circular shape of recess 329 is shown, other forms of the recess, or recesses, including those with angular or linear shapes would be operable as well.

Recess 329 extends in a linear and coaxial direction and connects the cavity space 33 in the area of flight 322 with the ambient. While the connecting function is essential for venting, strict linearity of recess 329 is not. It appears that a rotor as shown in the upper part of Fig.3 is capable of acting as a shearing flight because of its axial recess 329 while also having a scraping effect because of the smooth outer portions of the cylindrical rotor.

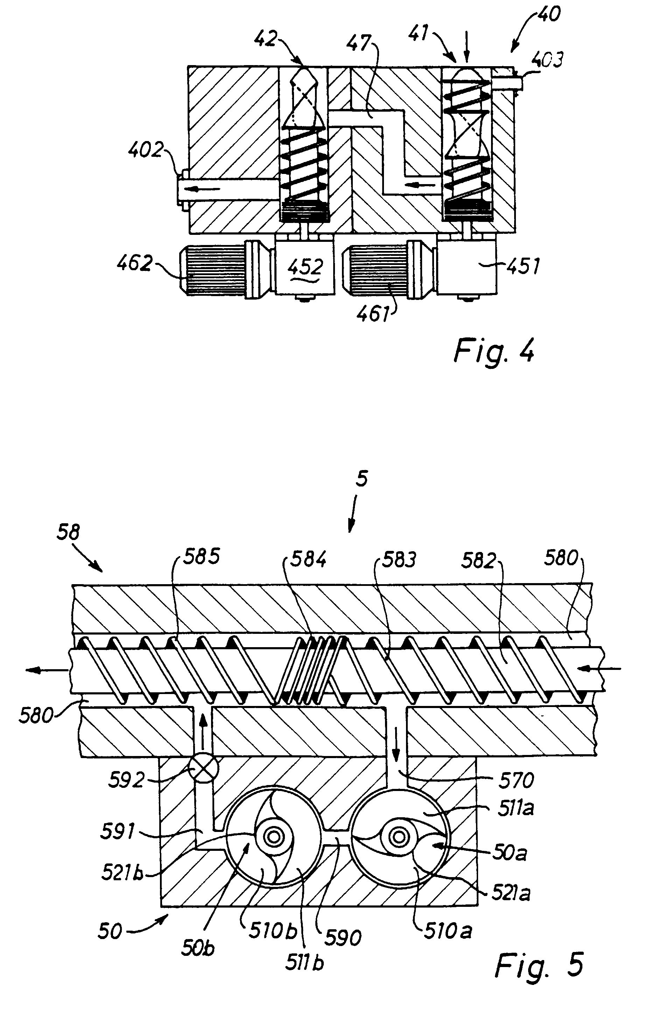

Figure 4 illustrates a composite port 40 consisting of an upstream first processor 41 of the type shown in Fig. 2 and a second downstream processor 42 as shown in Fig. 1. Such an arrangement is, of course, suitable both for co-feeding as well as venting and degassing in either or both ports 41,42. It should be noted that in the illustration of Fig. 4 the shape, dimension and position of duct 47 connecting ports 41 and 42 is merely schematic and not intended to show a practical connection of the ports 41,42 with each other, nor with a co-ordinated extruder (not shown).

Fig. 5 illustrates an apparatus 5 according to the invention, e.g. in the form of a combination of a composite port 50 formed of two ports 50a and 50b (both shown in top view and having a structure as shown in Fig. 1) with an otherwise conventional extruder 58 of which only the portion connected with the inventive ports is shown.

Shearing flights 521a, 521b operate in the manner explained above; it is to be noted that channels 570,591 connecting the port arrangement 50 with extruder 58 are not in a common horizontal plane; channel 570 connecting extruder 58 with first port 50a opens radially into the upper portion of port 50a, i.e. in the area of shearing flight 521a, while channel 591 extend radially from the scraping flight portion (not shown) of port 50b. the same plane each divide the upper portion of the corresponding port cavity into two separate portions 510a,511a; 510b,511b as mentioned above.

Longitudinal axis of extruder 58 extends in an essentially horizontal direction while longitudinal axes of port devices 50a and 50b extend in an essentially vertical direction.

It is to be noted that apparatus 5 might include more than two ports, or that a single vertical port could be connected with horizontal extruder 58 for both venting and co-feeding purposes.

Extruder 58 is shown in a fragmented view with a sectioned barrel 581 and a screw 582 shown in lateral top view; screw 582 extends co-axially with barrel 581 and cavity 580 in an essentially horizontal direction. Neither the drive end nor the extrusion end of extruder 58 are shown in Fig. 5.

Screw 582 includes a conveying (in the direction of the arrows) upstream scraping flight portion 583, a conveying downstream scraping flight portion 585 and a stop- or retro-flow zone 584 formed by a group of inversely inclined scraping flights. The function of zone 584 is to prevent flow of material from section 582 to 585 without passing port section 50 and no actual back-flow is intended.

In effect, zone 584 forces the stream of material conveyed within cavity 580 by scraping flight portion 583 laterally outward from extruder 58 through inlet 570 into the first port 510a and from there into port 510b so as to reenter extruder cavity 580 downstream of zone 584 via outlet 580. For control purposes, a valve 581 is arranged in the path of outlet 580 so as to adapt and optimise process flow conditions in accordance with the requirements of the processed material and the processing conditions. Such adaptation and optimisation are within the purview of those experienced in the extrusion art.

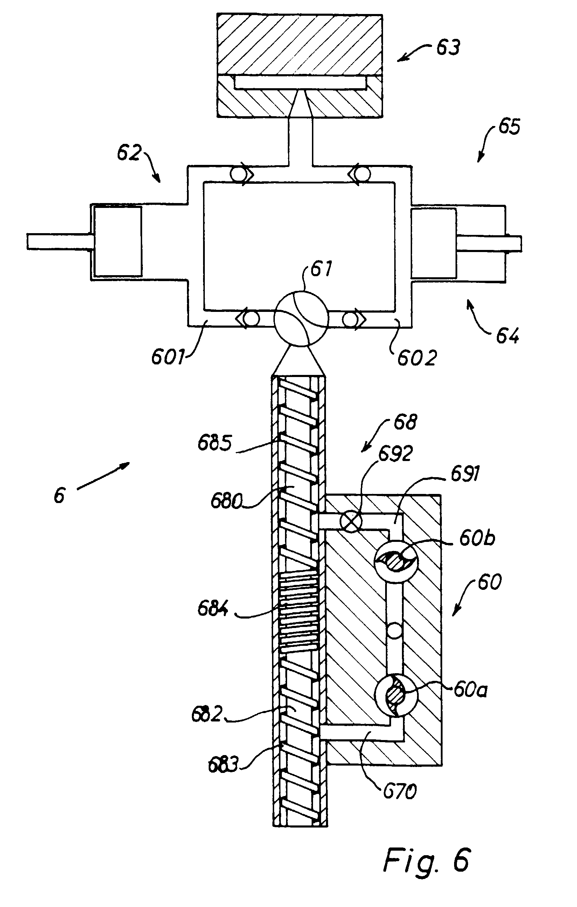

Fig. 6 illustrates an apparatus 6 which is a combination of an extruder 68 with a composite port device 60 of the type shown in Fig. 5, except that only the entry side of extruder 68 is omitted while the output side is connected via a two-way valve 61 alternatingly with branches 601 and 602 leading to rams 65 and 65, respectively. Both rams are connected with a moulding device 63 for alternating injection.

Reverse-flight section 684 deflects a stream of material conveyed by upstream scraping flight section 683 of rotor section 682 so that the material is forced through conduit 670 into the upstream port 60a of composite port 60 and through downstream port 60b via conduit 692 and control valve 692 into cavity 680 where it is conveyed by downstream scraping flight section 685 into the two-way valve 61.

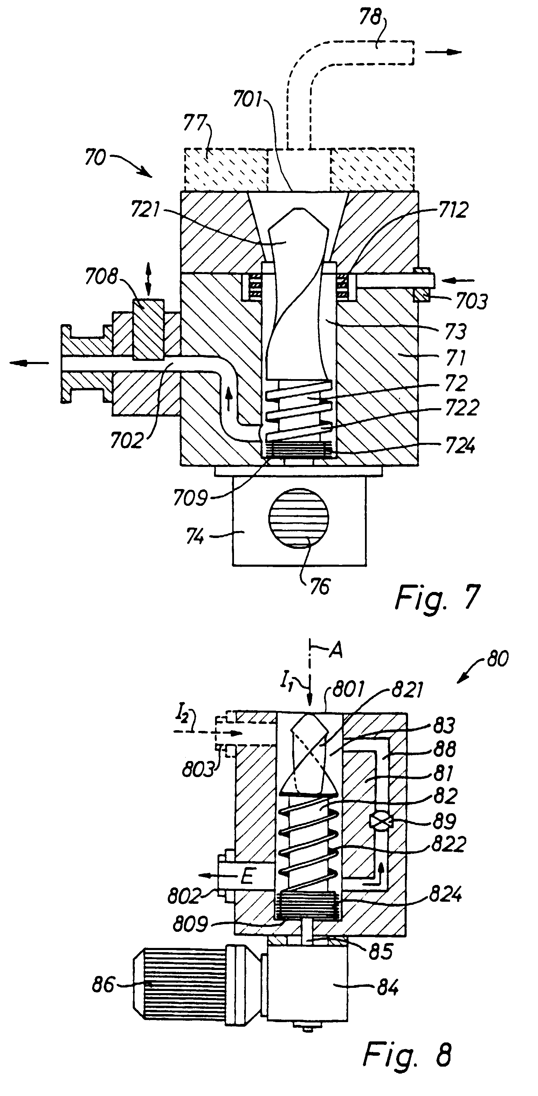

Port device 70 shown in Fig.7 is a modification of the port device of Fig. 1. In addition, radial inlet 703 comprises an annulus 712 provided with radially extending perforations so that the viscous material entering into port 70 from a co-ordinated extruder is dispersed when entering cavity 73. Such an additional dispersing or distributing means 712 for the processes material upon it's entry into the cavity of the port device represents another preferred feature of the invention. Further, the output from port device 70 can be controlled by a slide valve 708 or similar flow control means which permits complete closure or reduction of the of the output channel 702. Obviously, another flow control means (not shown) could be provided at the entry side of port 70.

While port device 70 is provided with an open end 701, this does not preclude that such open end is not provided with a connecting means, e.g. a cover plate 77 and an conduit 78 which may serve to feed out a gaseous constituent for venting, or to feed in a gaseous constituent into the processed material.

Port 80 shown in Fig. 8 illustrates a re-circulating means in a port device of the type shown in Fig. 1. For example, a channel or conduit 88 is provided to connect a upstream portion in the area of shearing flight 721 and near the upper end 801 of cavity 83 with a downstream portion near the lower end 809 of cavity 83. The conveying effect of scraping flight 722 upon rotation of rotor 72 re-circulates a controlled portion of the viscous material within port device 80. Conduit 88 can be provided with a flow control device 89 for controlling re-circulation and additional flow control means (not shown) can be provided in or near output end 802.

It is to be noted that one or more port devices according to the invention can be in various operative connections with one or more extruders or similar processors. For example, the extruder could be of the type used for injection moulding purposes and having a helical rotor capable of axial displacement back and forth, and operating in the manner of a ram for pressing a viscous polymer composition into on or more injection moulds. In such an embodiment, the rotor of the extruder would have a sealing portion near its out-feeding so as to act in the manner of a piston; the port device could then form a connection between the cavity portions of the extruder upstream and downstream of the sealing portion and provide controlled feeding of the injection process.

Port devices according to the present invention can be used wherever viscous materials are produced or processed by means of extruders or similar processors. Polymer compositions (typically having a viscosity of above 100 mPa.s when at processing temperatures) suitable for extruder processing are candidate materials regardless of their fillers or other constituents. Also, fillers which tend to cause problems, such as fibrous materials, e.g. reinforcing fibres of glass, stone, wood, carbon, or high strength polymer (aromatic polyamides and other high-strength polymers in the form of fibres) can be fed., or co-fed by means of the novel port devices.

It will be apparent to those experienced in the art that various changes can be made within the scope of the present disclosure without departing from the inventive teaching. For example, conventional heating means may be incorporated into a port according to the invention if autogenous heating caused by the action of the flights, or heat conveyed from an upstream or downstream portion of a co-ordinated extruder is nor sufficient for maintaining a desired plastification effect.

So, while the invention has been illustrated above by reference to specific preferred examples thereof, the scope of the present invention is not limited by such examples but should be construed from the following claims.

## Claims

1. A port device(10;20;30;70;80) for processing control of a processor producing an essentially continuous stream of a viscous material; said port device comprising:
(i) an enclosure means(11;21;31;71;81) encompassing an elongated cavity(13;23;33;73;83) extending along a longitudinal axis(A) in an essentially vertical direction; said cavity having an axially open first end (101;201; 301;701; 801), a second end (109;209;309;709;809) opposite said first end, and an outlet(102;202;302;702;802) near said second end;
(ii) at least one elongated rotor(12;22;32;72;82) arranged within said cavity for rotation in an essentially coaxial alignment with said longitudinal axis of said cavity;
(iii) drive means (14,16;24,26;74,76;84,86) connected with said at least one rotor for rotation thereof within said cavity; and
(iv) conveying means for causing a stream of said viscous material to flow in a direction from said open first end toward said second end and through said outlet when said rotor is actuated by said drive means; characterised in that said conveying means include at least one scraping flight section (122;222;322;722;822) provided on said rotor near said outlet, and at least one shearing flight section (121;221;321;721;821) provided upstream of said scraping flight section, wherein the distance between the outermost surface of the flights and the inner surface of the cavity is substantially greater in the shearing flight section than in the scraping flight section by a factor of at least 10.

2. The port device (10;20;30;70;80) of claim 1 wherein the at least one shearing flight section (121;221;321;721;821) is provided in a first portion of the longitudinal extension of said rotor (12;22;32;72;82) while said scraping flight section(122;222;322;722;822) provides an adjacent second portion of the longitudinal extension of said rotor, wherein the ratio of said first portion to said second portion is in the range of from about 0.1 to about 8.

3. The port device (10;20;30;70;80) of claims 1 or 2 wherein said enclosure means (11;21;31;71;81) comprises an inlet(103;203;303;703;803) for feeding said viscous material into said cavity (13;23;33;73;83) in an essentially radial direction(I₂) downstream of said first end (101;201;301;701;801) of said port device.

4. The port device (10;20;30;70;80) of any of claims 1 - 3 wherein said outlet(102;202;302;702;802) extends in an essentially radial direction from said elongated cavity(13;23;33;73;83) for passing said viscous material out of said port device.

5. The port device (30) of any of claims 1 - 4 wherein said conveying means (iv) comprises at least one section formed by a generally cylindrical surface portion (321) of said at least one rotor (32) and a stationary flight section (311) provided in a wall portion of said cylindrical cavity (33) adjacent said cylindrical surface portion.

6. The port device (30) of claim 5 wherein said at least one rotor (32) is provided with at least one elongated recess (329) extending in an axial direction for connecting said axially open end (301) with a region of said cavity (33) adjacent said stationary flight section (324).

7. The port device (10;20;70;80) of any of claims 1 - 6 wherein said drive means(14,16;24,26;74,76;84,86) is connected with said at least one rotor(12;22;72;82) near said second end (109;209;709:809) of said cavity (13;23;73;83).

8. The port device(10;20;30;70;80) of any of claims 1 - 7 comprising at least one additional means (592;708;712;89) for controlling passage of said polymer composition through said port device.

9. An apparatus for processing a stream of a viscous composition; said apparatus comprising at least one extruder in operative connection with at least one port device as claimed in any of claims 1 - 8.

10. A method of processing a viscous polymer composition by means of at least one extruder; said method comprising forming a molten polymer compositions in said at least one extruder and controlling processing of said polymer composition, at least in part, by means of at least one port device as claimed in any of claims 1 - 8.

11. The method of claim 10 wherein said controlling includes at least one type of process control selected from supplemental mixing of said polymer composition; feeding at least one additional constituent into said polymer composition; venting said polymer composition; re-circulating said polymer composition from one part of said extruder into a different part thereof; and controlling feeding of said polymer composition from said extruder into a moulding operation.

## Patentansprüche

1. Schleuseneinrichtung (10;20;30;70;80) zur Betriebssteuerung eines Prozessors, der einen im wesentlichen kontinuierlichen Strom eines viskosen Materials erzeugt; wobei die Schleuseneinrichtung aufweist:
(i) ein Umschliessung (11;21;31;71;81) mit einem länglichen Hohlraum, der sich entlang einer Längsachse (A) in einer im wesentlichen vertikalen Richtung erstreckt, wobei der Hohlraum ein achsial offenes erstes Ende (101;201;301;701; 801), ein dem ersten Ende entgegengesetztes Ende (109;209;309;709;809) und einen Auslass (102;202;302;702;802) nahe dem zweiten Ende aufweist,
(ii) mindestens einen länglichen Rotor (12;22;32;72;82), der im Hohlraum zur Rotation in einer im wesentlichen koaxialen Ausrichtung mit der Längsachse des Hohlraumes angeordnet ist,
(iii) Antriebsmittel (14,16;24,26;74,76;84,86), die mit dem mindestens einen Rotor zu dessen Rotation in Hohlraum verbunden sind, und
(iv) Fördermittel zum Bewirken des Fliessens eines Stromes des viskosen Materials in einer Richtung vom ersten offenen Ende zum zweiten Ende und durch den Auslass, wenn der Rotor von den Antriebsmitteln betätigt wird, dadurch gekennzeichnet, dass die Fördermittel mindestens einen am Rotor nahe dem Auslass angeordneten Streifgangabschnitt (122;222;322;722;822) und mindestens einen stromaufwärts vom Streifgangabschnitt angeordneten Schergangabschnitt (121;221;321;721;821) aufweisen, wobei der Abstand zwischen der äussersten Oberfläche der Gänge und der Innenfläche des Hohlraumes im Schergangabschnitt erheblich und um einen Faktor von mindestens 10 grösser ist als im Streifgangabschnitt.

2. Schleuseneinrichtung (10:20:30;70;80) nach Anspruch 1, bei welcher der mindestens eine Schergangabschnitt (121;221;321;721;821) in einem ersten Teil der Längserstreckung des Rotors (12;22;32;72;82) angeordnet ist und der Streifgangabschnitt (122;222;322;722;822) einen benachbarten Teil der Längserstreckung des Rotors bildet, wobei das Verhältnis des ersten Abschnitts zum zweiten Abschnitt im Bereich von etwa 0,1 bis etwa 8 liegt.

3. Schleuseneinrichtung (10:20:30;70;80) nach Anspruch 1 oder 2, bei der die Umschliessung (11;21;31;71;81) einen Einlass (103;203;303;70;803) zur Einspeisung des viskosen Materials in den Hohlraum (13;23;33;73;83) in einer im wesentlichen radialen Richtung (I₂) abstromseitig vom ersten Ende (101;201;301;701;801) der Schleuseneinrichtung besitzt.

4. Schleuseneinrichtung (10:20:30;70;80) nach einem der Ansprüche 1 - 3, bei der sich der Auslass (102;202;302;702;802) zur Abgabe des viskosen Materials aus der Schleuseneinrichtung vom länglichen Hohlraum (13;23;33;73;83) in einer im wesentlichen radialen Richtung erstreckt.

5. Schleuseneinrichtung (30) nach einem der Ansprüche 1 - 4, bei der die Fördermittel (iv) mindestens einen, von einem im wesentlichen zylindrischen Oberflächenteil (321) des mindestens einen Rotors (32) gebildeten Abschnitt sowie einen stationären Gangabschnitt (311) aufweisen, der an einem Wandungsteil des zylindrischen Hohlraumes (33) benachbart zum zylindrischen Oberlächenteil angeordnet ist.

6. Schleuseneinrichtung (30), bei dem der mindestens eine Rotor (32) mit mindestens einer länglichen Ausnehmung (329) versehen ist, die sich zur Verbindung des achsial offenen Endes (30) mit einem Bereich des Hohlraumes (33), der an den stationären Gangabschnitt angrenzt, in achsialer Richtung erstreckt.

7. Schleuseneinrichtung (10:20:30;70;80) nach einem der Ansprüche 1 - 6, bei welcher die Antriebsmittel (14,16;24,26;74,76;84,86) nahe dem zweiten Ende (109;209;709;809) des Hohlraumes (13;23;73;83) mit dem mindestens einen Rotor verbunden sind.

8. Schleuseneinrichtung (10:20:30;70;80) nach einem der Ansprüche 1 - 7 mit mindestens einem zusätzlichen Mittel (592;708;712;89) zur Steuerung des Durchsatzes der Polymermasse durch die Schleuseneinrichtung.

9. Anlage zur Verarbeitung eines Stromes eines viskosen Materials, die einen Extruder in operativer Verbindung mit mindestens einer Schleuseneinrichtung nach einem der Ansprüche 1- 8 umfasst.

10. Verfahren zur Verarbeitung einer viskosen Polymermasse mit mindestens einem Extruder unter Bildung einer geschmolzenen Polymermasse in dem mindestens einen Extruder und Steuerung der Verarbeitung der Polymermasse mindestens teilweise mittels mindestens einer Schleuseneinrichtung nach einem der Ansprüche 1 - 8.

11. Verfahren nach Anspruch 10, bei dem die Steuerung mindestens einen Prozesssteuerungstyp umfasst, der gewählt ist aus dem zusätzlichem Mischen der Polymermasse, der Einspeisung mindestens einer zusätzlichen Komponente in die Polymermasse, der Belüftung der Polymermasse, derRezirkulation der Polymermasse aus einem Teil des Extruders in einen anderen Teil hiervon und der Steuerung der Einspeisung der Polymermasse aus dem Extruder in einen Formungsvorgang.

## Revendications

1. Dispositif d'accès (10; 20; 30; 70; 80) pour assurer la commande du traitement d'un dispositif de traitement produisant un courant essentiellement continu d'une matière visqueuse; ledit dispositif d'accès comprenant:
(i) un moyen d'enceinte (11; 21; 31; 71; 81) entourant une cavité allongée (13; 23; 33; 73; 83) s'étendant le long d'un axe longitudinal (A) dans une direction essentiellement verticale; ladite cavité comportant une première extrémité axialement ouverte (101; 201; 301; 701; 801), une deuxième extrémité (109; 209; 309; 709; 809) opposée à ladite première extrémité, et un orifice de sortie (102; 202; 302; 702; 802) près de ladite deuxième extrémité;
(il) au moins un rotor allongé (121; 22; 32; 72; 82) agencé dans ladite cavité en vue d'une rotation dans un alignement essentiellement coaxial avec ledit axe longitudinal de ladite cavité;
(iii) des moyens d'entraînement (14, 16; 24, 26; 74, 76; 84, 86) connectés à au moins un rotor en vue d'une rotation correspondante dans ladite cavité; et
(iv) des moyens d'acheminement pour entraîner l'écoulement d'un courant de ladite matière visqueuse dans une direction à partir de ladite première extrémité ouverte, en direction de ladite deuxième extrémité et à travers ledit orifice de sortie lors de l'actionnement dudit rotor par lesdits moyens d'entraînement; caractérisé en ce que lesdits moyens d'acheminement englobent au moins une section de filet de raclage (122; 222; 322; 722; 822) agencée sur ledit rotor près dudit orifice de sortie, et au moins une section de filet de cisaillement (121; 221; 321; 721; 821) agencée en amont de ladite section de filet de raclage, la distance entre la surface la plus externe des filets et la surface interne de la cavité étant notablement supérieure dans la section de filet de cisaillement que dans la section de filet de raclage, dépassant celle-ci d'un facteur d'au moins 10.

2. Dispositif d'accès (10; 20; 30; 70; 80) selon la revendication 1, dans lequel la au moins une section de filet de cisaillement (121; 221; 321; 721; 821) est agencée dans une première partie de l'extension longitudinale dudit rotor (12; 22; 32; 72; 82), ladite section de filet de raclage (122; 222; 322; 722; 822) établissant une deuxième partie adjacente de l'extension longitudinale dudit rotor, le rapport entre ladite première partie et ladite deuxième partie étant compris dans un intervalle allant d'environ 0,1 à environ 8.

3. Dispositif d'accès (10; 20; 30; 70; 80) selon les revendications 1 ou 2, dans lequel ledit moyen d'enceinte (11; 21; 31; 71; 81) comprend un orifice d'entrée (103; 203; 303; 703; 803) pour amener ladite matière visqueuse dans ladite cavité (13; 23; 33; 73; 83) dans une direction essentiellement radiale (I₂), en aval de ladite première extrémité (101; 201; 301; 701; 801) dudit dispositif d'accès.

4. Dispositif d'accès (10; 20; 30; 70; 80) selon l'une quelconque des revendications 1 à 3, dans lequel ledit orifice de sortie (102; 202; 302; 702; 802) s'étend dans une direction essentiellement radiale à partir de ladite cavité allongée (13; 23; 33; 73; 83) pour faire passer ladite matière visqueuse en-dehors dudit dispositif d'accès.

5. Dispositif d'accès (30) selon l'une quelconque des revendications 1 à 4, dans lequel ledit moyen d'acheminement (iv) comprend au moins une section formée par une partie de surface généralement cylindrique (321) dudit au moins un rotor (32) et une section de filet stationnaire (311). agencée dans une partie de paroi de ladite cavité cylindrique (33), adjacente à ladite partie de surface cylindrique.

6. Dispositif d'accès (30) selon la revendication 5, dans lequel ledit au moins un rotor (32) comporte au moins un évidement allongé (329) s'étendant dans une direction axiale pour connecter ladite extrémité axialement ouverte (301) à une région de ladite cavité (33) adjacente à ladite section de filet stationnaire (324).

7. Dispositif d'accès (10; 20; 70; 80) selon l'une quelconque des revendications 1 à 6, dans lequel ledit moyen d'entraînement (14, 16; 24, 26; 74, 76; 84, 86) est connecté audit au moins un rotor (12; 22; 72; 82) près de ladite deuxième extrémité (109; 209; 709; 809) de ladite cavité (13; 23; 73; 83).

8. Dispositif d'accès (10; 20; 30; 70; 80) selon l'une quelconque des revendications 1 à 7, comprenant au moins un moyen additionnel (592; 708; 712; 89) pour vérifier le passage de ladite composition polymère à travers ledit dispositif d'accès.

9. Dispositif servant au traitement d'un courant d'une composition visqueuse; ledit dispositif comprenant au moins une extrudeuse, connectée en service à au moins un dispositif d'accès selon l'une quelconque des revendications 1 à 8.

10. Procédé de traitement d'une composition polymère visqueuse par l'intermédiaire d'au moins une extrudeuse; ledit procédé comprenant la formation d'une composition polymère fondue dans ladite au moins une extrudeuse et la commande du traitement de ladite composition polymère, au moins en partie, par l'intermédiaire d'au moins un dispositif d'accès selon l'une quelconque des revendications 1 à 8.

11. Procédé selon la revendication 10, dans lequel ladite commande englobe au moins un type de commande de traitement sélectionné dans le groupe comprenant un malaxage supplémentaire de ladite composition polymère; l'addition d'au moins un composant additionnel dans ladite composition polymère; l'aération de ladite composition polymère; la remise en circulation de ladite composition polymère, d'une partie de ladite extrudeuse vers une partie différente de celle-ci; et la commande de l'amenée de ladite composition polymère de ladite extrudeuse dans une opération de moulage.
